(19) Europäisches Patentamt / European Patent Office / Office européen des brevets

(11) **EP 2 038 613 B1**

(12) **FASCICULE DE BREVET EUROPEEN**

(45) Date de publication et mention de la délivrance du brevet:
**24.02.2010 Bulletin 2010/08**

(51) Int Cl.:
*G01C 23/00* (2006.01)   *B64C 13/16* (2006.01)
*G05D 1/06* (2006.01)

(21) Numéro de dépôt: **07730261.0**

(22) Date de dépôt: **20.06.2007**

(86) Numéro de dépôt international:
**PCT/EP2007/056125**

(87) Numéro de publication internationale:
**WO 2008/003591 (10.01.2008 Gazette 2008/02)**

(54) **CONVERTISSEUR DE COMMANDE DE FACTEUR DE CHARGE EN CONSIGNE D'ECART D'ASSIETTE LONGITUDINALE**

UMSETZER ZUM UMSETZEN EINES LASTFAKTORBEFEHLS IN EINE LONGITUDINAL-LAGEABWEICHUNGSANWEISUNG

CONVERTER FOR CONVERTING A LOAD FACTOR COMMAND INTO A LONGITUDINAL ATTITUDE DEVIATION INSTRUCTION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.07.2006 FR 0606221**

(43) Date de publication de la demande:
**25.03.2009 Bulletin 2009/13**

(73) Titulaire: **Thales**
**92200 Neuilly Sur Seine (FR)**

(72) Inventeur: **RIEDINGER, Marc**
**31830 Plaisance Du Touch (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 0 485 263     FR-A- 2 874 204**
**FR-A1- 2 747 204     FR-A1- 2 841 008**
**US-A- 5 213 282**

**Description**

L'invention concerne l'avionique et, plus précisément, les systèmes de contrôle de vol assurant les fonctions dé pilote automatique et de directeur de vol.

Les systèmes de contrôle de vol sont des automatismes permettant, dans leurs modes de fonctionnement de base, d'amener et de maintenir un aéronef dans une configuration de vol correspondant à un vecteur vitesse et/ou attitude pré-déterminés, et, dans des modes de fonctionnement dits "supérieurs" d'amener un aéronef sur un type de trajectoire prédéfinie. Ils agissent sur les commandes de vol, soit directement, lorsqu'ils fonctionnent en pilote automatique, soit par l'intermédiaire du pilote auquel ils fournissent des consignes, lorsqu'ils fonctionnent en directeur de vol. Ils renferment des calculateurs programmés pour estimer les écarts existant entre l'attitude, le vecteur vitesse ou la trajectoire courante de l'aéronef par rapport à une attitude, un vecteur vitesse ou une trajectoire de consigne et pour en déduire les ordres à faire exécuter par les commandes de vol ou le sens et l'amplitude des manoeuvres à conseiller au pilote pour réduire ces écarts.

Afin d'imiter au plus près le comportement d'un pilote, les systèmes de contrôle de vol sont conçus avec deux niveaux de boucles de contrôle : un premier niveau de boucles de contrôle dit "grande boucle" déterminant les valeurs que doivent prendre les paramètres primaires de vol utilisés par les pilotes pour un vol aux instruments pour parvenir à l'altitude, au vecteur vitesse ou à la trajectoire corrects, et un deuxième niveau de boucles de contrôle dit "petite boucle" traduisant les valeurs de paramètres délivrées par la grande boucle, soit en commandes pour les actionneurs contrôlés par les commandes de vol pour un fonctionnement en pilote automatique, soit en indications d'écart à corriger s'affichant dans le cockpit, sur l'écran PFD de visualisation des paramètres primaires de vol pour un fonctionnement en directeur de vol.

Avec des commandes de vol classiques, à simple assistance mécanique, hydraulique et/ou électrique, comportant un manche permettant au pilote d'imposer la position des gouvernes et admettant l'angle d'assiette longitudinale comme paramètre primaire de contrôle dans le plan vertical, les systèmes de contrôle de vol comportent, pour le contrôle des paramètres de trajectoire dans leurs différents modes de fonctionnement, des grandes boucles délivrant des commandes en angle d'assiette longitudinale exploitées par des petites boucle délivrant, en fonctionnement de pilote automatique, les signaux d'actionnement des commandes et, en fonctionnement de directeur de vol, une consigne d'assiette longitudinale mise à disposition du pilote sur l'écran PFD.

Avec des commandes de vol électriques (fly-by-wire) comportant un manche ou manette permettant au pilote d'entrer, selon l'axe vertical, des consignes de facteur de charge assimilé par la suite à une accélération verticale bien qu'en toute rigueur, un coefficient en cosinus dû à l'angle de roulis intervienne dans la relation qui les lie, et donc admettant le facteur de charge comme paramètre primaire de vol en lieu et place de l'angle d'assiette longitudinale, les systèmes de contrôle de vol comportent, pour le contrôle des paramètres de trajectoire dans leurs différents modes de fonctionnement, des grandes boucles délivrant des commandes en facteur de charge exploitées par des petites boucle délivrant, en fonctionnement de pilote automatique, les signaux d'actionnement des commandes et, en fonctionnement de directeur de vol, une consigne de facteur de charge mise à disposition du pilote sur l'écran PFD.

Il est apparu que, dans un fonctionnement en pilote automatique, les systèmes de contrôle de vol à grandes boucles délivrant des commandes en facteur de charge sont plus réactifs que ceux à grandes boucles délivrant des commandes en écart d'angle d'assiette longitudinale de sorte qu'il serait intéressant de les adapter aux commandes de vol classiques si ce n'était la difficulté pour un pilote de suivre une consigne de facteur de charge avec des commandes de vol classiques plus appropriées au suivi de consigne d'angle d'assiette longitudinale.

Le document FR-A-2 874 204 relie le facteur de charge et la vitesse de l'avion au moyen d'un intégrateur.

La présente invention a pour but de résoudre le problème d'adaptation précité en dotant un système de contrôle de vol pourvu de grandes boucles délivrant des commandes en facteur de charge, de petites boucles convertissant une commande en facteur de charge issue d'une grande boucle en une consigne d'écart d'assiette longitudinale destinée à être mise à disposition d'un pilote opérant avec des commandes de vol classiques admettant l'angle d'assiette longitudinale comme paramètre primaire de vol dans le plan vertical.

Elle a pour objet un convertisseur, pour aéronef, de commande en facteur de charge $N_{zc}$ en consigne d'écart d'assiette longitudinale $\Delta\theta_c$. comportant un circuit générateur d'écart d'assiette longitudinale avec un intégrateur appliquant la relation simplifiée de mécanique du vol liant le facteur de charge $N_{zc}$ à un écart d'assiette longitudinale $\Delta\theta_c$ :

$$\Delta\theta_c = \frac{\alpha}{TAS} \cdot \int (N_{zc} + \tau_\gamma \cdot \frac{dN_{zc}}{dt})dt$$

$\alpha = 180/\pi$ étant un coefficient de conversion de radians en degrés,
$\tau_\gamma$ la constante de trajectoire de l'avion et
TAS la vitesse air vraie de l'aéronef considéré,

remarquable en ce que le circuit générateur d'écart d'assiette longitudinale comporte en outre, un filtre passe-haut rappelant à long terme, vers une valeur constante, la valeur de consigne d'écart d'assiette longitudinale fournie par l'intégrateur.

Avantageusement, le filtre passe-haut a une constante de temps $\tau_w$ de l'ordre de 12 secondes, dépendant du type d'aéronef.

Avantageusement, l'intégrateur et le filtre passe-haut sont combinés en un filtre passe-bande du premier ordre ayant une fréquence de coupure haute égale à $1/2\pi\tau_\gamma$ et une fréquence de coupure basse égale à $1/2\pi\tau_w$ associé à un amplificateur-atténuateur ayant un gain égal à :

$$\frac{\alpha \times \tau_w}{TAS}$$

Avantageusement, le convertisseur comporte en outre un circuit générateur de consigne d'écart d'assiette longitudinale comportant un deuxième filtre passe-haut recevant une valeur courante d'angle d'assiette longitudinale et tendant à le rappeler vers la valeur nulle, un circuit soustracteur avec une entrée additive connectée en sortie du deuxième filtre passe-haut et une entrée soustractive connectée en sortie du circuit générateur d'écart d'assiette longitudinale, et, en sortie du circuit soustracteur, un filtre passe-bas.

Avantageusement, le deuxième filtre passe-haut a une constante de temps $\tau_{w\theta}$ dont la valeur est du même ordre de grandeur que la constante de temps $\tau_w$ du filtre passe-haut du circuit générateur d'écart d'assiette longitudinale.

Avantageusement, le circuit générateur de consigne d'écart d'assiette longitudinale comporte des amplificateurs-atténuateurs de réglage intercalés en sortie du deuxième filtre passe-haut et en sortie du filtre passe-bas.

Avantageusement, le filtre passe-bas du circuit générateur de consigne d'écart d'assiette longitudinale possède une fonction de transfert du premier ordre avec une constante de temps $\tau_f$ de l'ordre de 0,8 s.

D'autres caractéristiques et avantages de l'invention ressortiront de la description ci-après d'un mode de réalisation donné à titre d'exemple. Cette description sera faite en regard du dessin dans lequel :

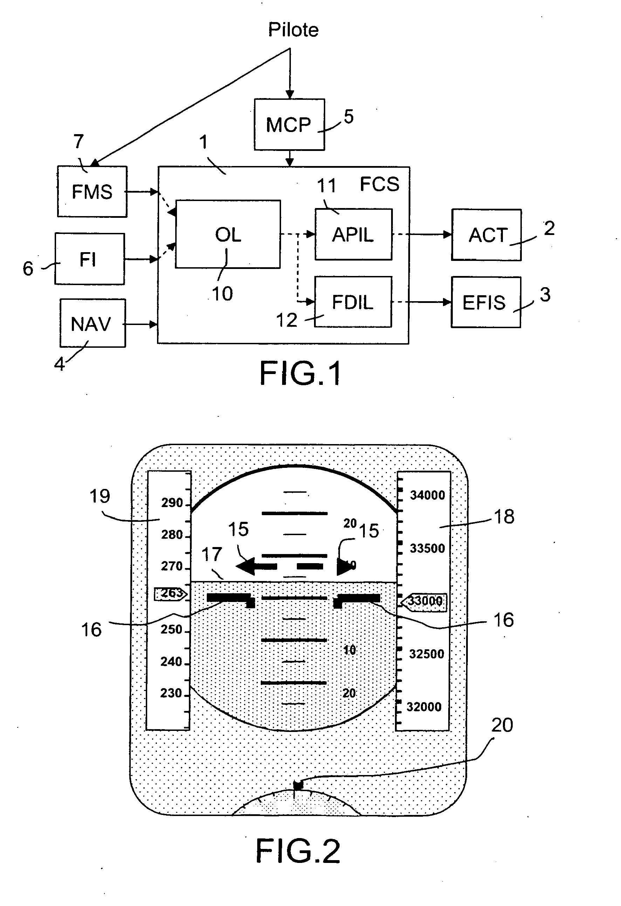

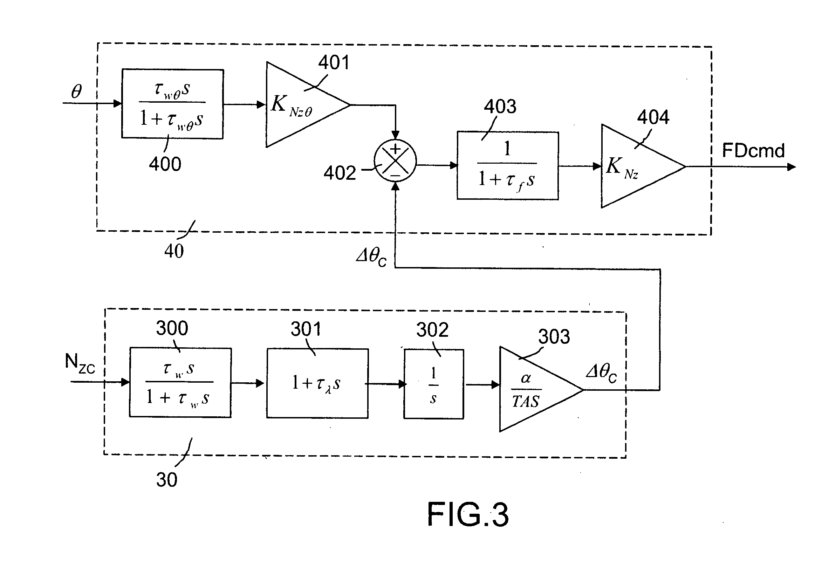

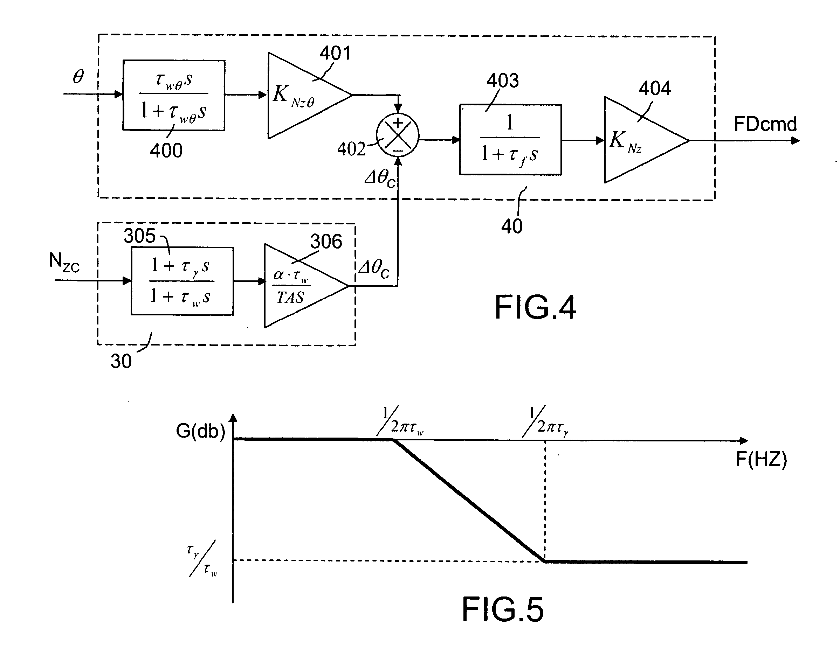

- une figure 1 est un schéma situant un système de contrôle du vol dans son environnement au sein des équipements d'un aéronef,
- une figure 2 représente un écran PFD d'affichage des paramètres primaires de vol affichant une barre de consigne d'assiette,
- une figure 3 est un schéma de principe d'un convertisseur selon l'invention,
- une figure 4 est un deuxième schéma de principe d'un convertisseur selon l'invention découlant par simplification de celui de la figure 3, et
- une figure 5 est un diagramme de courbe illustrant le comportement d'un filtre utilisé pour la conversion d'un facteur de charge en écart d'assiette longitudinale.

Un système de contrôle de vol FCS 1 fournit une assistance au pilotage permettant le maintien d'un aéronef dans différents types prédéfinis de configuration de vol correspondant à une attitude et/ou un vecteur vitesse prédéterminés (modes de base) ou à des trajectoires prédéterminées (modes supérieurs). Il peut fonctionner soit en pilote automatique AP, soit en directeur de vol FD. Lorsqu'il fonctionne en pilote automatique, il agit directement sur les actionneurs de positionnement des gouvernes ACT 2. Lorsqu'il fonctionne en directeur de vol, il fournit au pilote, par l'intermédiaire des afficheurs des équipements de vol EFIS 3 de sa planche de bord, des consignes de pilotage concernant le réglage des paramètres primaires de vol. Il est commandé par le pilote, par l'intermédiaire d'une interface homme-machine MCP 5 à voyants, boutons et interrupteurs permettant de sélectionner et de paramétrer l'un de ses modes de fonctionnement. Il est constitué d'un ou plusieurs calculateurs élaborant les ordres des actionneurs des gouvernes et les consignes de pilotage en fonction de son paramétrage du moment et des informations sur la vitesse, l'attitude, l'altitude, l'écart par rapport à un faisceau d'approche ou de navigation et le cap courants de l'aéronef fournies par les équipements de vol FI 6, des informations sur le plan de vol prévu fournies par le calculateur de navigation FMS 7, ou des écarts de radio-navigation fournis par des récepteurs radioélectriques NAV4 .

Comme rappelé précédemment, le système de contrôle de vol 1 possède deux niveaux de boucles de contrôle : un premier niveau de boucles de contrôle dit "grande boucle" OL 1O, une par mode, déterminant les valeurs que doivent prendre les paramètres primaires de vol utilisés par les pilotes pour un vol aux instruments pour parvenir au cap, à l'altitude et à la vitesse corrects, et un deuxième niveau de boucles de contrôle dit "petite boucle" traduisant les valeurs de paramètres délivrées par la grande boucle, soit, pour celles de type APIL 11, en commandes pour les actionneurs des gouvernes ACT 2 lors d'un fonctionnement en pilote automatique PA, soit pour celles FDIL 12 en indications d'écart à corriger s'affichant dans le cockpit, sur les écrans des équipements de vol EFIS 3, notamment l'écran PFD de visualisation des paramètres primaires de vol lors d'un fonctionnement en directeur de vol FD.

Dans les modes faisant appel à un contrôle de vol dans le plan vertical, le système de contrôle de vol 1 possède une grande boucle OL 10 délivrant une consigne de facteur de charge ou accélération verticale $N_{zc}$ en tant que paramètre primaire de vol et deux petites boucles :

- une petite boucle APIL 11 traduisant, lors d'un fonctionnement en pilote automatique PA, la consigne de facteur de charge $N_{zc}$ délivrée par la grande boucle APIL en commandes pour les actionneurs des gouvernes (profondeur) ACT 2, et
- une petite boucle FDIL 12 traduisant, lors d'un fonctionnement en directeur de vol, la consigne de facteur de charge $N_{zc}$ délivrée par la grande boucle OL en un indicateur d'écart FDcmd s'affichant dans le cockpit, sur l'écran de visualisation PFD affichant les paramètres primaires de vol utilisés par le pilote en cas de pilotage sans visibilité.

L'indicateur d'écart FDcmd s'affichant sur l'écran de visualisation PFD pour un contrôle de vol dans le plan vertical peut être, par exemple, comme représenté à la figure 2, une barre horizontale 15 se déplaçant dans le plan vertical, que le pilote doit s'efforcer d'aligner avec la maquette avion 16, tout en surveillant l'horizon artificiel 17, l'indicateur d'altitude 18 placé à droite, l'indicateur de vitesse 19 placé à gauche et l'indicateur de cap 20 disposé en dessous ou au-dessus.

La petite boucle APIL 11 est constituée de boucles d'asservissement prenant en compte les réactions des actionneurs et l'efficacité des gouvernes. Elle ne sera pas détaillée car sa structure dépend étroitement de caractéristiques des actionneurs et des gouvernes. Elle est élaborée selon les méthodes habituelles usitées dans la technique des asservissements en recherchant un temps de réponse aussi faible que possible tout en évitant les pompages.

Avec les commandes de vol électriques "fly-by-wire" mettant à disposition du pilote un manche ou une manette dont le déplacement longitudinal correspond à une modification du facteur de charge et où la relation entre déplacement de la manette et modification du facteur de charge est intuitive, la petite boucle FDIL est de conception simple car un indicateur d'écart FDcmd représentatif de la différence existant entre la consigne d'accélération verticale, qui est une consigne de facteur de charge et le facteur de charge courant mesuré par les instruments de vol FI 7 est tout indiqué.

Avec des commandes de vol classiques à simple assistance mécanique, hydraulique et/ou électrique, comportant un manche permettant au pilote d'imposer la position des gouvernes et volets et où un déplacement longitudinal du manche est plus en relation avec un changement d'assiette longitudinale qu'avec une modification du facteur de charge, un indicateur d'écart FDcmd représentatif de la différence existant entre une consigne de facteur de charge et le facteur de charge courant ne convient plus et doit être remplacé par un indicateur d'écart FDcmd représentatif de la modification d'angle d'assiette longitudinale permettant de suivre la consigne de facteur de charge délivrée par la grande boucle OL 10. La petite boucle FDIL 12 doit remplir la fonction d'un convertisseur de facteur de charge en écart d'assiette. Comme représenté à la figure 3, elle se compose alors d'un convertisseur 30 de facteur de charge en écart d'assiette longitudinale associé à un générateur 40 de consigne d'écart d'assiette longitudinale délivrant un indicateur d'écart s'affichant sur l'écran PFD de visualisation des paramètres primaires de vol.

Le convertisseur 30 met en oeuvre la relation simplifiée suivante de la mécanique du vol liant le facteur de charge $N_{zc}$ à l'écart d'assiette longitudinale $\Delta\theta_c$ :

$$\Delta\theta_c = \frac{\alpha}{TAS} \cdot \int (N_{zc} + \tau_\gamma \cdot \frac{dN_{zc}}{dt})dt$$

$\alpha = 180/\pi$ étant un coefficient de conversion radians/degrés,
$\tau_\gamma$ la constante de trajectoire de l'avion et
TAS étant la vitesse air vraie.

Cette relation s'écrit également, en utilisant l'opérateur s de Laplace et en tenant compte de la mise en oeuvre par calculateur qui implique un échantillonnage pour la numérisation de la consigne de facteur de charge $N_{zc}$:

$$\Delta\theta_c = \frac{\alpha}{TAS} \frac{1 + \tau_\gamma \cdot s}{s} N_{zc} \qquad (1)$$

avec une constante de temps d'échantillonnage $\tau_\gamma$ de l'ordre de 0,5 à 2 secondes tenant compte des caractéristiques de l'aéronef.

Pour la mise en oeuvre de cette relation (1), le convertisseur 30 peut comporter, comme montré à la figure 3, un filtre passe-haut 301 défini par la fonction de transfert du premier ordre :

$$1+\tau_\gamma s$$

suivi par un circuit intégrateur 302 et par un amplificateur 303 ayant un gain variable égal à :

$$\frac{\alpha}{TAS}$$

Pour tenir compte du potentiel de divergence de l'opération d'intégration effectuée sur le facteur de charge $N_{zc}$ dès que ce dernier n'est pas rigoureusement nul et faire en sorte que la consigne d'écart d'assiette longitudinale $\Delta\theta_c$ ne diverge pas lorsque le pilote ne suit pas l'indicateur d'écart FDcmd sur le long terme, typiquement sur une durée de plus de 12 secondes, un filtre passe-haut 300 rappelant à long terme, vers zéro, la valeur avant intégration pour le calcul de $\Delta\theta_c$ est ajouté au convertisseur 30. Ce filtre passe-haut 300 présente la fonction de transfert suivante :

$$\frac{\tau_w.s}{1+\tau_w.s}$$

la constante de temps $\tau_w$ étant de l'ordre de 12 secondes pour un avion de transport moyen de gamme.

En finale, la valeur d'angle d'assiette longitudinale $\Delta\theta_c$ délivrée par le convertisseur 30 à partir du facteur de charge $N_{zc}$ répond à la relation de définition suivante, exprimée en opérateur s de Laplace :

$$\Delta\theta_c = \frac{\alpha}{TAS} \cdot \frac{1+\tau_\gamma s}{s} \cdot \frac{\tau_w s}{1+\tau_w s} \cdot N_{zc} \qquad (1)$$

La relation (1) se simplifiant sous la forme :

$$\Delta\theta_c = \frac{\alpha}{TAS} \cdot \frac{1+\tau_\gamma s}{1+\tau_w s} \cdot \tau_w.N_{zc} \qquad (2)$$

le convertisseur 30 de facteur de charge en angle d'assiette longitudinale est aussi décomposable, comme représenté à la figure 4, en un filtre passe-bande 305 défini par la fonction de transfert du premier ordre :

$$\frac{1+\tau_\gamma s}{1+\tau_w s}$$

suivi par un amplificateur 306 ayant un gain variable égal à :

$$\frac{\alpha\tau_w}{TAS}$$

La figure 5 montre le diagramme de Bode du filtre passe-bande 305 qui réalise l'intégration du facteur de charge entre les fréquences de pilotage $1/2\pi\tau_\gamma$ et $1/2\pi\tau_w$. Le filtre passe-bande 305 présente un gain de transfert égal à l'unité pour les fréquences plus basses, et égal à $\tau_\gamma/\tau_w$ pour les fréquences plus hautes.

Le générateur 40 de commande de directeur de vol opère à partir de la différence constatée entre l'écart d'assiette longitudinale courant $\theta$ mesuré par les équipements de vol FI 6 (figure 1) et la consigne d'écart d'assiette longitudinale $\Delta\theta_c$ délivrée par le convertisseur 30 de facteur de charge en écart d'assiette longitudinale. Plus précisément, il opère à partir d'une mesure d'angle d'assiette longitudinale courant soumise au préalable d'une part, à un filtre passe-haut ramenant vers zéro sa valeur à long terme et, d'autre part à un réglage d'amplitude de coefficient de réglage $K_{Nz\theta}$, et délivre un signal d'écart soumis préalablement à un filtrage passe-bas du premier ordre et à un réglage d'amplitude de coefficient de réglage $K_{Nz}$.

En final, le générateur 40 d'écart d'assiette longitudinale délivre un indicateur d'écart FDcmd répondant à la relation de définition :

$$FDcmd = K_{Nz} \cdot \frac{1}{1+\tau_f s} \cdot \left( K_{Nz\theta} \cdot \frac{\tau_{w\theta} s}{1+\tau_{w\theta} s} \cdot \theta - \Delta\theta_c \right)$$

et peut être décomposé, comme représenté dans les figures 3 et 4, en :

- un filtre passe-haut 400 opérant sur l'angle d'assiette longitudinale mesuré $\theta$ et défini par la fonction de transfert du premier ordre :

$$\frac{\tau_{w\theta} s}{1+\tau_{w\theta} s}$$

dont la constante de temps $\tau_{w\theta}$ est du même ordre de grandeur que la constante de temps $\tau_w$,
- un amplificateur-atténuateur de réglage 401 connecté à la suite du filtre d'amortissement 400 et introduisant un coefficient $K_{Nz\theta}$ de réglage d'amplitude,
- un circuit soustracteur 402 recevant sur une entrée additive la mesure d'angle d'assiette longitudinale courant transmise par l'amplificateur-atténuateur 401 et sur une entrée soustractive la consigne d'écart d'assiette longitudinale $\Delta\theta_c$ délivrée par le convertisseur 30 de facteur de charge en écart d'assiette longitudinale,
- un filtre passe-bas 403 connecté en sortie du circuit soustracteur 402 et défini par la fonction de transfert du premier ordre :

$$\frac{1}{1+\tau_f s}$$

$\tau_f$ étant une constante de temps de l'ordre de 0,8 seconde permettant d'obtenir un mouvement lissé pour l'indicateur d'écart FDcmd, et
- un amplificateur-atténuateur de réglage 404 connecté à la suite du filtre passe-bas 403 et introduisant un coefficient $K_{Nz}$ de réglage d'amplitude.

Les coefficients de réglage $K_{Nz}$ et $K_{Nz\theta}$, ainsi que les constantes de temps $\tau_\gamma$, $\tau_w$, $\tau_{w\theta}$ et $\tau_f$ sont ajustés en fonction des caractéristiques de l'aéronef et du mode considéré, par des essais en simulateur de vol.

Le convertisseur 30 de facteur de charge en consigne d'écart d'assiette longitudinale et le générateur 40 d'écart d'assiette longitudinale sont réalisés selon les techniques classiques de construction des filtres numériques à partir de fonctions de transfert exprimées en opérateur de Laplace s, en passant éventuellement par la transformée en z.

## Revendications

1. Convertisseur, pour aéronef, de commande en facteur de charge $N_{zc}$ en consigne d'écart d'assiette longitudinale $\Delta\theta_c$ comportant un circuit générateur d'écart d'assiette longitudinale (30) avec un intégrateur à gain variable (301, 302, 303) appliquant la relation de mécanique du vol liant le facteur de charge $N_{zc}$ à l'écart d'assiette longitudinale $\Delta\theta_c$ :

$$\Delta\theta_c = \frac{\alpha}{TAS} \cdot \int (N_{zc} + \tau_\gamma \cdot \frac{dN_{zc}}{dt}) dt$$

**EP 2 038 613 B1**

$\alpha=180/\pi$ étant un coefficient de conversion de radians en degrés,
$\tau_\gamma$ la constante de trajectoire de l'avion, et
TAS la vitesse air vraie de l'aéronef considéré,

**caractérisé en ce que** le circuit générateur d'écart d'assiette longitudinale (30) comporte en outre, un filtre passe-haut (300) rappelant à long terme, vers une valeur constante, la valeur de consigne d'écart d'assiette longitudinale fournie par l'intégrateur (301, 302, 303).

**2.** Convertisseur selon la revendication 1, **caractérisé en ce que** la constante de temps $\tau_w$ du filtre passe-haut (300) du générateur de consigne d'écart d'assiette longitudinale (30) est de l'ordre de 12 secondes, dépendant du type d'aéronef

**3.** Convertisseur selon la revendication 1, **caractérisé en ce que** l'intégrateur (301, 302, 303) et le filtre passe-haut (300) du générateur de consigne d'écart d'assiette longitudinale (30) sont combinés en un filtre passe-bande (305) du premier ordre ayant une fréquence de coupure haute égale à, $1/2\pi\tau_\gamma$, $\tau_\gamma$ étant une constante de trajectoire de l'aéronef, et une fréquence de coupure basse égale à $1/2\pi\tau_w$ associé à un amplificateur-atténuateur ayant un gain égal à :

$$\frac{\alpha\tau_w}{TAS}$$

**4.** Convertisseur selon la revendication 3, **caractérisé en ce que** la constante de temps $\tau_w$ du filtre passe-bande (305) est de l'ordre de 12 secondes, dépendant du type d'aéronef.

**5.** Convertisseur selon la revendication 1, **caractérisé en ce qu'**il comporte en outre un circuit générateur de consigne d'écart d'assiette longitudinale (40) comportant un deuxième filtre passe-haut (400) recevant une valeur courante d'angle d'assiette longitudinale et tendant à la rappeler vers la valeur nulle, un circuit soustracteur (402) avec une entrée additive connectée en sortie du deuxième filtre passe-haut (400) et une entrée soustractive connectée en sortie du circuit générateur de consigne d'écart d'assiette longitudinale (30), et, en sortie du circuit soustracteur (402), un filtre passe-bas (403).

**6.** Convertisseur selon la revendication 3, **caractérisé en ce que** le filtre passe-bande (305) a une constante de temps $\tau_\gamma$ de l'ordre de 2 secondes, dépendant de l'aéronef.

**7.** Convertisseur selon la revendication 6, **caractérisé en ce que** la constante de temps $\tau_{w\theta}$ du circuit dérivateur et du filtre passe-haut (400) a une valeur de l'ordre de celle de la constante de temps $\tau_w$ du premier circuit d'amortissement (305).

**8.** Convertisseur selon la revendication 5, **caractérisé en ce que** le circuit générateur de consigne d'écart d'assiette longitudinale (40) comporte des amplificateurs-atténuateurs de réglage (401, 402) intercalés en sortie du deuxième filtre passe-haut (400) et en sortie du filtre passe-bas (403).

**9.** Convertisseur selon la revendication 8, **caractérisé en ce que** le deuxième filtre passe-bas (403) possède une fonction de transfert du premier ordre avec une constante de temps $\tau_f$ de l'ordre de 0,8 s.

**Claims**

**1.** A converter, for aircraft, for converting a load factor command $N_{zc}$ in to a longitudinal attitude deviation instruction $\Delta\theta_c$ comprising a generator circuit for the longitudinal attitude deviation (30) with a variable gain integrator (301, 302, 303) applying the mechanical relationship of the flight by linking the load factor $N_{zc}$ to the longitudinal attitude deviation $\Delta\theta_c$:

$$\Delta\theta_c = \frac{\alpha}{TAS} \cdot \int (N_{zc} + \tau_\gamma \cdot \frac{dN_{zc}}{dt})dt$$

wherein $\alpha = 180/\pi$ is a conversion coefficient of radians in to degrees,
wherein $\tau_\gamma$ is the trajectory constant of the plane, and
TAS is the true airspeed of the aircraft under consideration,

**characterised in that** the generator circuit for the longitudinal attitude deviation (30) further comprises a high-pass filter (300) restoring the longitudinal attitude deviation instruction value supplied by the integrator (301, 302, 303) in to a constant value in the long term.

2. Converter according to claim 1, **characterised in that** time constant $\tau_w$ of the high pass filter (300) of the longitudinal attitude deviation instruction generator (30) is in the order of 12 seconds, depending on the type of aircraft.

3. Converter according to claim 1, **characterised in that** the integrator (301, 302, 303) and the high-pass filter (300) of the longitudinal attitude deviation instruction generator (30) are combined into one first order band-pass filter (305) having an upper cut-off frequency equal to $1/2\pi\tau_\gamma$, $\tau_\gamma$ being a trajectory constant of the aircraft, and a lower cut-off frequency equal to $1/2\pi\tau_w$ associated with an amplifier-attenuator having a gain equal to:

$$\frac{\alpha\tau_w}{TAS}$$

4. Converter according to claim 3, **characterised in that** the time constant $\tau_w$ of the band-pass filter (305) is in the order of 12 seconds, depending on the type of aircraft.

5. Converter according to claim 1, **characterised in that** it further comprises a generator circuit for the longitudinal attitude deviation instruction (40) comprising a second high-pass filter (400) receiving a running value of the longitudinal attitude angle and tending to restore it to a zero value, a subtracter circuit (402) with an additive input connected to the output of the second high-pass filter (400) and a subtractive input connected to the output of the generator circuit for the longitudinal attitude deviation instruction (30) and a low pass filter (403) at the output of the subtracter circuit (402).

6. Converter according to claim 3, **characterised in that** the band-pass filter (305) has a time constant $\tau_\gamma$ in the order of two seconds, depending on the aircraft.

7. Converter according to claim 6, **characterised in that** the time constant $\tau_{w\theta}$ for the differentiating circuit and the high-pass filter (400) has a value in the order of the time constant $\tau_w$ for the first damping circuit (305).

8. Converter according to claim 5, **characterised in that** the generator circuit for the longitudinal attitude deviation instruction (40) comprises adjustment amplifier-attenuators (401, 402) connected to the output of the second high-pass filter (400) and to the output of the low-pass filter (43).

9. Converter according to claim 8, **characterised in that** the second low-pass filter (403) has a first order transfer function with a time constant $\tau_\gamma$ in the order of 0.8 seconds.

**Patentansprüche**

1. Umsetzer zum Umsetzen eines Lastfaktorbefehls $N_{zc}$ in eine Longitudinallageabweichungsanweisung $\Delta\theta_c$, in Flugzeugen, der eine Longitudinallageabweichung-Generatorschaltung (30) mit einem Integrator (301, 302, 303) mit regelbarer Verstärkung umfasst, die die mechanische Beziehung des Flugs durch Verbinden des Lastfaktorbefehls $N_{zc}$ mit der Longitudinallageabweichung $\Delta\theta_c$ anwendet:

$$\Delta\theta_c = \frac{\alpha}{TAS} \cdot \int (N_{x} + \tau_\gamma \cdot \frac{dN_{x}}{dt})dt$$

wobei $\alpha=180/\pi$ ein Umsetzungskoeffizient von Radians in Grad ist,
$\tau_\gamma$ die Flugbahnkonstante des Flugzeugs ist, und
TAS die echte Luftgeschwindigkeit des betrachteten Flugzeugs ist,

**dadurch gekennzeichnet, dass** die Longitudinallageabweichung-Generatorschaltung (30) darüber hinaus einen Hochpassfilter (300) umfasst, der den vom Integrator (301, 302, 303) gelieferten Wert der Longitudinallageabweichungsanweisung langfristig auf einen konstanten Wert zurückführt.

2. Umsetzer nach Anspruch 1, **dadurch gekennzeichnet, dass** die Zeitkonstante $\tau_w$ des Hochpassfilters (300) des Longitudinallageabweichung-Anweisungsgenerators (30) in der Größenordnung von 12 Sekunden liegt, je nach Flugzeugtyp.

3. Umsetzer nach Anspruch 1, **dadurch gekennzeichnet, dass** der Integrator (301, 302, 303) und der Hochpassfilter (300) des Longitudinallageabweichung-Anweisungsgenerators (30) zu einem Bandpassfilter (305) erster Ordnung kombiniert sind, der eine obere Grenzfrequenz von $1/2\pi\tau_\gamma$, wobei $\tau_\gamma$ eine Flugbahnkonstante des Flugzeugs ist, und eine untere Grenzfrequenz von $1/2\pi\tau_w$ hat, assoziiert mit einem Verstärker/Dämpfungsglied mit einem Gewinn von:

$$\frac{\alpha\tau_w}{TAS}$$

4. Umsetzer nach Anspruch 3, **dadurch gekennzeichnet, dass** die Zeitkonstante $\tau_w$ des Bandpassfilters (305) in der Größenordnung von 12 Sekunden liegt, je nach Flugzeugtyp.

5. Umsetzer nach Anspruch 1, **dadurch gekennzeichnet, dass** er darüber hinaus eine Longitudinallageabweichungsanweisung-Generatorschaltung (40) umfasst, die Folgendes umfasst: einen zweiten Hochpassfilter (400), der einen laufenden Wert für den Longitudinallagewinkel empfängt und dazu neigt, den Wert auf null zurückzustellen, eine Subtrahierschaltung (402) mit einem Additionseingang, der am Ausgang des zweiten Hochpassfilters (400) angeschlossen ist, und einem Subtraktionseingang, der am Ausgang der Longitudinallageabweichungsanweisung-Generatorschaltung (30) angeschlossen ist, und am Ausgang der Subtrahierschaltung (402) einen Tiefpassfilter (403).

6. Umsetzer nach Anspruch 3, **dadurch gekennzeichnet, dass** der Bandpassfilter (305) eine Zeitkonstante $\tau_\gamma$ in der Größenordnung von 2 Sekunden hat, je nach Flugzeug.

7. Umsetzer nach Anspruch 6, **dadurch gekennzeichnet, dass** die Zeitkonstante $\tau_{w\theta}$ der Differenzierschaltung und des Hochpassfilters (400) einen Wert in der Größenordnung von dem der Zeitkonstante $\tau_w$ der ersten Dämpfungsschaltung (305) hat.

8. Umsetzer nach Anspruch 5, **dadurch gekennzeichnet, dass** die Longitudinallageabweichungsanweisung-Generatorschaltung (40) Regelverstärker-Dämpfungsglieder (401, 402) umfasst, die zwischen dem Ausgang des zweiten Hochpassfilters (400) und dem Ausgang des Tiefpassfilters (403) geschaltet sind.

9. Umsetzer nach Anspruch 8, **dadurch gekennzeichnet, dass** der zweite Tiefpassfilter (403) eine Übertragungsfunktion erster Ordnung mit einer Zeitkonstante $\tau_f$ in der Größenordnung von 0,8 sec besitzt.

Pilote

MCP —5

7          1          11   FCS

FMS          OL ---→ APIL --- ACT —2
                        10
6 — FI          12 — FDIL --- EFIS —3

NAV

4

## FIG.1

19          290          34000          18
          280     15     20 15
     17     270          33500
16          263          33000          16
          250
          240          32500
          230     10          20
               32000

20

## FIG.2

$\theta$ → $\dfrac{\tau_{w\theta}s}{1+\tau_{w\theta}s}$ 400 → $K_{Nz\theta}$ 401 → ⊕ 402 (+/−) → $\dfrac{1}{1+\tau_f s}$ 403 → $K_{Nz}$ 404 → FDcmd

40

$\Delta\theta_C$

$N_{ZC}$ → $\dfrac{\tau_w s}{1+\tau_w s}$ 300 → $1+\tau_\lambda s$ 301 → $\dfrac{1}{s}$ 302 → $\dfrac{\alpha}{TAS}$ 303 → $\Delta\theta_C$

30

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2874204 A